# EUROPEAN PATENT APPLICATION

(11) **EP 4 818 014 A1**
(43) Date of publication of application: **07.10.2026**
(21) Application number: 25861780.2
(22) Date of filing: 11.09.2025
(51) Int. Cl.: B62D 57/032

(54) **TENDON-DRIVEN HIGHLY COUPLED HUMANOID ROBOT LEG**

(30) Priority: 13.01.2025 CN 202510046885
(71) Applicant: Shanghai Droidup Co., Ltd., Shanghai 200082 (CN)
(72) Inventor: QIN, Yinjie, Shanghai 200082 (CN); TANG, Jun, Shanghai 200082 (CN); HU, Huaying, Shanghai 200082 (CN)
(74) Representative: Fabry, Bernd
(86) International application number: PCT/CN2025/120712
(87) International publication number: WO 2026/148901

(57) **Abstract**

A high-coupling humanoid robot leg based on tendon-driven includes a first driving device, a second driving device, a foot-plate structure, a shank support structure, and a thigh support structure. A first idler structure and a second idler structure are rotatably arranged on the knee-joint shaft structure. A first driving-wheel structure and a second driving-wheel structure are arranged on the ankle-joint shaft structure. A first tendon-driven transmission pair is connected in a transmission manner to the first driving device, and is wound on the first idler structure and then sleeved over the first driving-wheel structure to form a rotational transmission subassembly. A second tendon-driven transmission pair is connected in a transmission manner to the second driving device, and is wound on the second idler structure and then sleeved over the second driving-wheel structure to form a rotational transmission subassembly. A rotating direction of the second idler structure is different from a rotating direction of the second driving-wheel structure. The present invention can enable the achievement of higher peak torque and provide sufficient load capacity for a robot leg. The high-coupling humanoid robot leg has lower energy consumption, lower cost, small motion inertia, and less overall occupied space and mass.

## Description

### CROSS-REFERENCE TO RELATED APPLICATIONS

The present invention claims the priority to the Chinese patent application with the filing No. 2025100468857 filed with the Chinese Patent Office on January 13, 2025, and entitled "HIGH-COUPLING HUMANOID ROBOT LEG BASED ON TENDON-DRIVEN", the contents of which are incorporated herein by reference in entirety.

### TECHNICAL FIELD

The present invention relates to the technical field of humanoid robots, and specifically to a high-coupling humanoid robot leg based on tendon-driven.

### BACKGROUND ART

The leg is the foundation of the body design of a humanoid robot. The leg is also a key for a humanoid robot to execute complex-terrain tasks, which distinguishes humanoid robots from other robots. At present, leg structures of humanoid robots usually adopt joint-module motors that directly drive joints of the leg to operate, or joint-module motors that drive joints of the leg to operate through linkage structures. The former has a problem of large motion inertia. The latter has a problem in which linkage structures in transmission protrude abnormally, and cannot achieve a more refined humanoid appearance. Moreover, exposed linkage structures will generate problems in the safety and lubrication and maintenance of motion. Both adopt a conventional drive mode in which one motor drives one joint. At present, under the same mass and volume, the power and peak torque of joint-module motors are fixed. If a leg joint is designed with sufficiently high load, the joint module becomes bulky with large mass, high manufacturing cost, and a distal joint module of the leg will increase motion inertia and energy consumption of a proximal joint module.

Patent document with publication number CN118289111A discloses a leg power structure of a humanoid robot and a humanoid robot. One leg power structure of a humanoid robot includes a stride-driving unit, a thigh assembly, a shank assembly, and a foot assembly, which are located at a waist portion of the humanoid robot and connected in sequence. The stride-driving unit is configured to drive the entire leg power structure to swing forward and backward. The thigh assembly includes a first thigh body and a second thigh body. The shank assembly includes a shank body. The foot assembly includes a foot support member. A hip-joint driving unit is arranged at an upper portion of the first thigh body to drive the entire leg power structure to swing leftward and rightward. A first driving unit is arranged between the first thigh body and the second thigh body to achieve circumferential relative rotation between the first thigh body and the second thigh body. The above technical solution adopts a linkage transmission structure. Although motion inertia can be reduced to a certain extent, motion inertia remains large, and problems of bulky joint modules with large mass still exist. From drawings in the specification, it can be seen that the appearance adopts a design in which the rear side of the leg is hollowed out to the greatest extent to reduce a swollen visual impression of the leg. However, this design cannot reduce the weight of joint modules, manufacturing cost, and energy consumption during use. Furthermore, the flattened design inevitably exposes more joint modules, and it is difficult to achieve a more refined humanoid appearance.

### SUMMARY OF INVENTION

To remedy deficiencies in existing humanoid robot technologies, the present invention provides a high-coupling humanoid robot leg based on tendon-driven. The structure is simple, capable of achieving higher peak torque, and providing sufficient load capacity for a robot leg. The overall motion process has lower energy consumption, and the robot leg has lower manufacturing cost, very small motion inertia, and lower occupied overall space and mass. The present invention facilitates improved appearance design and safety design of a more lightweight robot body.

The specific technical solution is as follows.

A high-coupling humanoid robot leg based on tendon-driven includes a first driving device, a second driving device, a foot-plate structure, a shank support structure, and a thigh support structure, wherein the foot-plate structure is rotatably mounted at one end of the shank support structure through an ankle-joint shaft structure, and the thigh support structure is rotatably mounted at another end of the shank support structure through a knee-joint shaft structure;
a first idler structure and a second idler structure are rotatably arranged on the knee-joint shaft structure, the first idler structure and the second idler structure are arranged side by side in an independent manner, a first driving-wheel structure and a second driving-wheel structure are arranged on the ankle-joint shaft structure, and the first driving-wheel structure and the second driving-wheel structure are fixedly connected with the foot-plate structure; and
a first tendon-driven transmission pair is connected in a transmission manner to an output end of the first driving device, the first tendon-driven transmission pair is wound on the first idler structure and then sleeved over the first driving-wheel structure to form a tightened rotational transmission subassembly. The rotating direction of the first idler structure is identical to that of the first driving-wheel structure. A second tendon-driven transmission pair is connected in a transmission manner to an output end of the second driving device. The second tendon-driven transmission pair is wound on the second idler structure and then sleeved over the second driving-wheel structure to form a tightened rotational transmission subassembly. The rotating direction of the second idler structure is different from that of the second driving-wheel structure. According to the described transmission relationship, the second idler structure and the second driving-wheel structure rotate in opposite directions under the same driving of the second driving device along the same direction. The terms "first" and "second" herein have no specific pointing meaning; they are merely a descriptive distinction. Therefore, the rotating direction of the first idler structure and the rotating direction of the first driving-wheel structure can be opposite under driving of the first driving device. One wheel among the first idler structure, the second idler structure, the first driving-wheel structure, and the second driving-wheel structure rotates in a direction different from the rotating directions of the other three wheels under the same driving direction. Since only one set of the idler structure and the driving-wheel structure rotates in opposite directions, and another set of the idler structure and the driving-wheel structure rotates in identical direction, the set with identical rotating direction must have a rotating direction that matches the rotating direction of one of the idler structure and the driving-wheel structure in the set with opposite rotating directions.

Optionally, sprockets or synchronous belt wheels are arranged at the output ends of the first driving device and the second driving device. Other transmission structures that do not slip and are convenient for bending and connecting ropes can also be adopted. The first idler structure, the first driving-wheel structure, the second idler structure, and the second driving-wheel structure are winding wheels. The first tendon-driven transmission pair and the second tendon-driven transmission pair are both composed of chains or synchronous belts and non-elastic ropes, wherein the non-elastic ropes are respectively connected to two end portions of the chain or synchronous belt. The chains or the synchronous belts cooperate with the sprockets or the synchronous belt wheels, and the non-elastic ropes are sleeved on corresponding winding wheels to form a rotational transmission system.

Optionally, a non-elastic rope A and a non-elastic rope B are connected to two end portions of the chain or the synchronous belt, respectively; the non-elastic rope A and the non-elastic rope B are snapped on the foot-plate structure or on corresponding first driving-wheel structure and second driving-wheel structure, respectively; and the non-elastic rope A and the non-elastic rope B of the second tendon-driven transmission pair are arranged in a crossed manner between the second idler structure and the second driving-wheel structure.

Optionally, a first sprocket and a second sprocket are arranged at output ends of the first driving device and the second driving device respectively; the first tendon-driven transmission pair is composed of a first chain, a first metal cable A, and a first metal cable B, wherein the first metal cable A and the first metal cable B are respectively connected to two end portions of the first chain; the first chain cooperates with the first sprocket; the first metal cable A and the first metal cable B are wound around the first idler structure and then sleeved over the first driving-wheel structure to form a tightened rotational transmission system;
the second tendon-driven transmission pair is composed of a second chain, a second metal cable A, and a second metal cable B, wherein the second metal cable A and the second metal cable B are respectively connected to two end portions of the second chain; the second chain cooperates with the second sprocket; the second metal cable A and the second metal cable B are wound around the second idler structure and then sleeved over the second driving-wheel structure to form a tightened rotational transmission system; and the second metal cable A and the second metal cable B are arranged in a crossed manner between the second idler structure and the second driving-wheel structure.

Optionally, a joint-frame mounting support seat is fixedly mounted on the ankle-joint shaft structure, and the joint-frame mounting support seat is configured to mount the foot-plate structure; and the first driving-wheel structure and the second driving-wheel structure are arranged at two side portions of the joint-frame mounting support seat.

Optionally, two sides of the joint-frame mounting support seat are respectively arranged with one set of snap-hole slots; the set of snap-hole slots is composed of a fixed snapping slot and an adjustment snapping hole; the fixed snapping slot and the adjustment snapping hole are arranged at two end portions of the joint-frame mounting support seat respectively, and corresponding to position of the first driving-wheel structure or the second driving-wheel structure; and
a snapping-head structure is fixedly arranged at the end portions of the first metal cable A and the second metal cable A; the snapping-head structure cooperates with the corresponding fixed snapping slot; a tightening-adjustment snapping-head structure is arranged at the end portions of the second metal cable B and the first metal cable B; and the tightening-adjustment snapping-head structure cooperates with the corresponding adjustment snapping hole.

Optionally, the first driving device and the second driving device are motor modules.

Optionally, transmission ratios among the first driving device, the first idler structure, and the first driving-wheel structure are equal to transmission ratios among the second driving device, the second idler structure, and the second driving-wheel structure. This facilitates a more orderly structural design and facilitates the precise calculation of motion-control modes for subsequent combined driving.

Optionally, the first driving device and the second driving device are mounted on the thigh support structure. The first driving device and the second driving device are arranged opposite to each other and have the same power parameters. This also facilitates a more orderly structural design and facilitates the precise calculation of motion-control modes for subsequent combined driving.

Optionally, the ankle-joint shaft structure is rotatably mounted at an end portion of the shank support structure through a bearing structure; the foot-plate structure is fixedly mounted on the ankle-joint shaft structure; and the first driving-wheel structure, the second driving-wheel structure, the ankle-joint shaft structure, and the foot-plate structure are fixedly connected to each other.

The beneficial effects of the present invention are as follows. A coupling drive is performed through a transmission mechanism connected to two driving devices, so as to achieve the distribution of kinetic energy and the combination of kinetic energy. This enables the two driving devices to control independent motion or combined motion of two joints under different rotating-combination states. That is, an effect identical to two single driving devices independently controlling two joints can be achieved. Specifically, two joints can move independently, two joints can move simultaneously in a combined manner, and motion with identical speeds or different speeds can both be achieved. The tendon-driven design reduces motion inertia and further eliminates space and mass occupied by distal joint modules. This makes motion inertia extremely small. Required driving force and energy consumption are also relatively lower. It is convenient for selecting an improved appearance design and is beneficial to the safety of the robot body.

Under the condition that no blind spot exists in the motion combination of the transmission-combination control described above, since the present solution can achieve independent motion of a single joint through combined control of two driving devices, higher peak torque can be achieved. This provides higher load capacity for a robot leg. The transmission mechanisms connected to two driving devices independently restrict the motion of the two joints. In a condition that one driving device or transmission mechanism has a fault, another set of the driving device and the transmission mechanism can still maintain stability of the two joints, thus enabling safer waiting for inspection and maintenance, and providing improved structural stability.

Under identical load conditions, the required power parameters of two driving devices for control are relatively small. Volume and mass are generally smaller. In general conditions that do not require full kinetic energy, since kinetic-energy distribution can be equivalent to two small-power driving devices independently controlling two independent joints, energy consumption is saved. Since two independent joints themselves require two driving devices for driving, achieving larger peak kinetic energy and torque ordinarily requires larger driving devices. The transmission solution of the present invention overcomes this problem. After adoption of the transmission solution of the present invention, theoretically, even when peak torque and kinetic energy are required to be increased to twice the original values, larger-power driving devices are not required. Therefore, manufacturing cost is reduced, and overall occupied space and mass of the device are reduced.

### BRIEF DESCRIPTION OF DRAWINGS

FIG. 1 is a schematic structural diagram of two legs of a robot of the present invention;
FIG. 2 is a schematic structural diagram of an overall structure of the present invention;
FIG. 3 is a schematic sectional structural diagram of a knee-joint shaft structure in the present invention;
FIG. 4 is a schematic sectional structural diagram of an ankle-joint shaft structure in the present invention;
FIG. 5 is a schematic diagram of a first tendon-driven transmission pair and a second tendon-driven transmission pair in the present invention;
FIG. 6 is a schematic diagram of mounting a first tendon-driven transmission pair and a second tendon-driven transmission pair in the present invention; and
FIG. 7 is a schematic diagram of an ankle-joint shaft structure at a side view in the present invention.

Reference numerals: first driving device 1; second driving device 2; foot-plate structure 3; shank support structure 4; thigh support structure 5; ankle-joint shaft structure 6; knee-joint shaft structure 7; first tendon-driven transmission pair 8; second tendon-driven transmission pair 9;
first sprocket 11; second sprocket 21; first driving-wheel structure 61; second driving-wheel structure 62; joint-frame mounting support seat 63; fixed snapping slot 601; adjustment snapping hole 602; first idler structure 71; second idler structure 72;
first chain 81; first metal cable A82; first metal cable B83; fixed snapping-head structure 801; tightening-adjustment snapping-head structure 802; second chain 91; second metal cable A92; second metal cable B93.

### DETAILED DESCRIPTION OF EMBODIMENTS

Detailed descriptions of preferred embodiments of the present invention are provided below in conjunction with the drawings. Advantages and features of the present invention can thus be more easily understood by those skilled in the art. A clearer and more definite definition of a protection scope of the present invention can thus be made.

In the description of the present invention, it should be noted that the terms "center", "longitudinal", "lateral", "length", "width", "thickness", "upper", "lower", "front", "rear", "left", "right", "vertical", "horizontal", "top", "bottom", "inner", and "outer", etc. indicate an orientation or positional relationship based on the orientation or positional relationship shown in the accompanying drawings and are intended only to facilitate and simplify the description of the present invention, not to indicate or imply that the device or element referred to must have a particular orientation, be constructed and operate in a particular orientation, and therefore are not to be construed as limiting the present invention.

In the description of the embodiments of the present invention, it should also be noted that, unless otherwise explicitly specified and defined, the terms "arrange", "mount", "link", and "connect" should be interpreted broadly. For example, they can refer to fixed connections, detachable connections, or integral connections; they can be directly connected or indirectly connected through an intermediary; they can refer to the communication between the interiors of two elements. Those of ordinary skill in the art can understand the meanings of the above terms in the present invention according to specific situations.

### The embodiments are as follows.

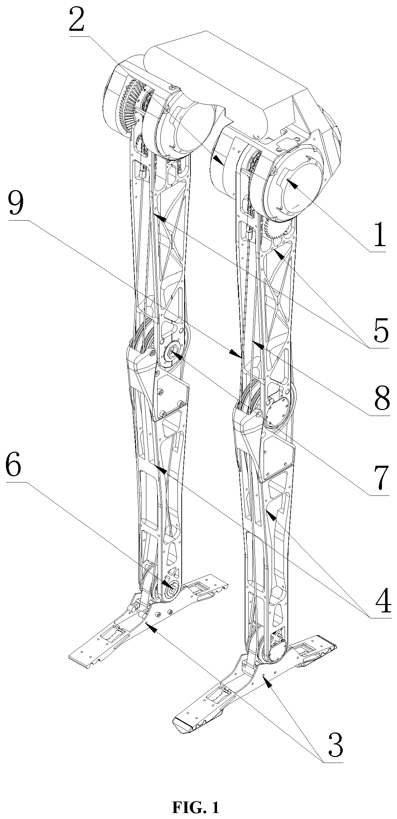

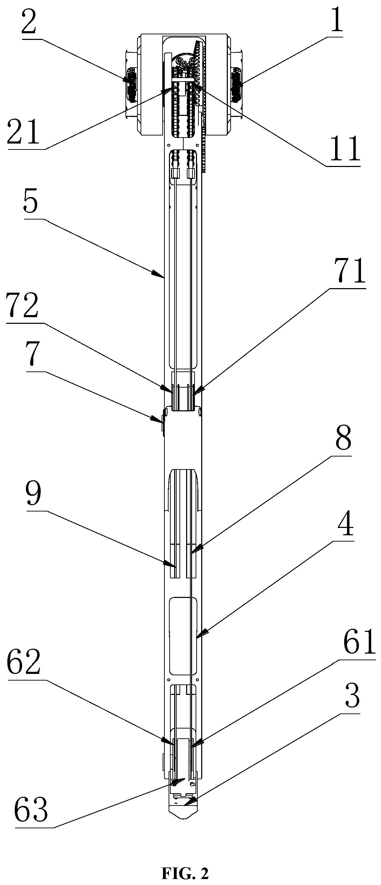

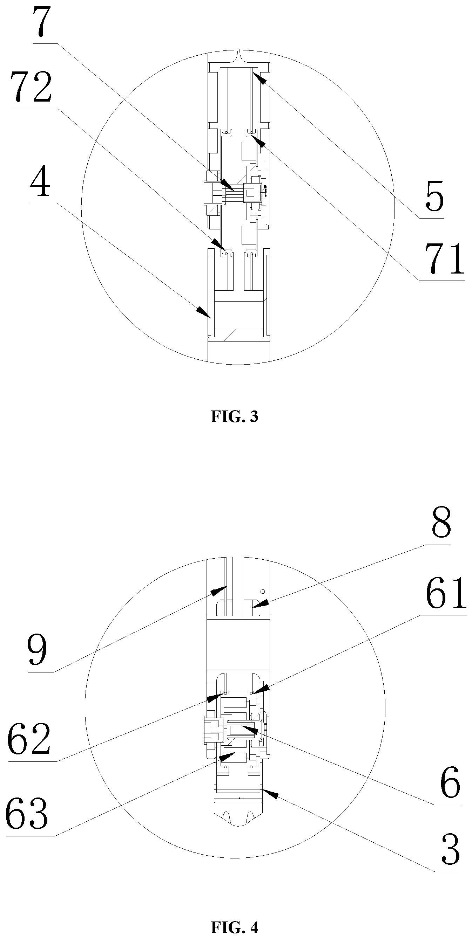

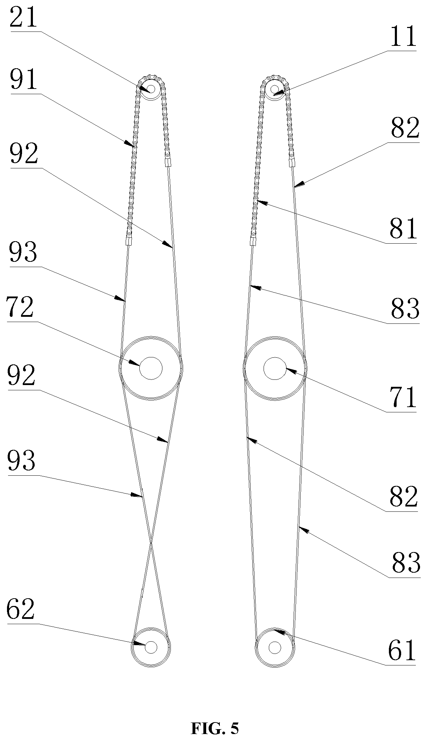

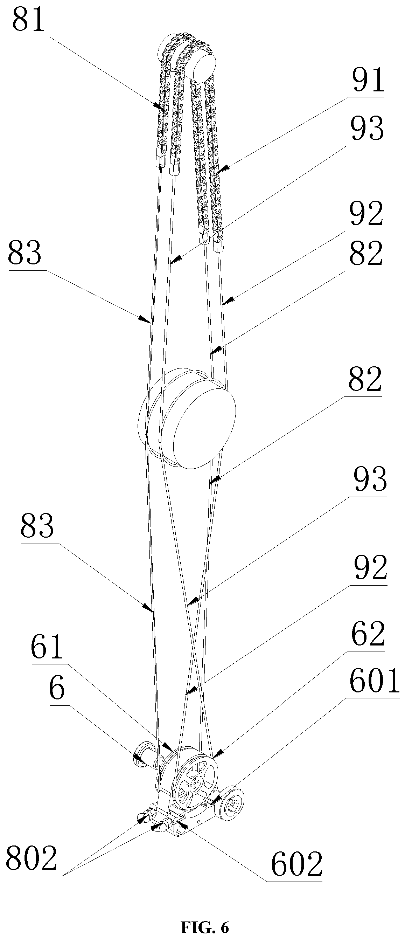

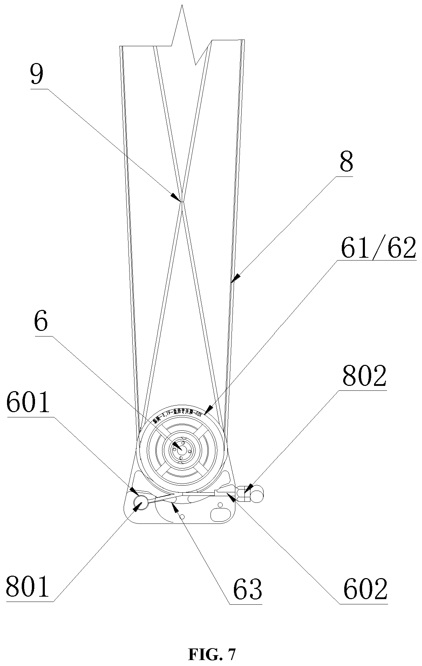

As shown in FIG. 1, FIG. 2, FIG. 3, FIG. 4, FIG. 5, FIG. 6, and FIG. 7, a high-coupling humanoid robot leg based on tendon-driven is provided, which is arranged with a first driving device 1, a second driving device 2, a foot-plate structure 3, a shank support structure 4, and a thigh support structure 5. The first driving device 1 and the second driving device 2 are motor modules, where other devices, such as hydraulic motors or pneumatic motors, can be adopted. Motor modules are used most in the robot field, and any structure that provides rotary drive or converts drive into rotary drive through a transmission assembly can theoretically be adopted. The foot-plate structure 3 is rotatably mounted at one end of the shank support structure 4 through an ankle-joint shaft structure 6. The thigh support structure 5 is rotatably mounted at another end of the shank support structure 4 through a knee-joint shaft structure 7.

A first idler structure 71 and a second idler structure 72 are rotatably arranged on the knee-joint shaft structure 7. The first idler structure 71 and the second idler structure 72 are arranged side by side in an independent manner. A first driving-wheel structure 61 and a second driving-wheel structure 62 are arranged on the ankle-joint shaft structure 6. The first driving-wheel structure 61 and the second driving-wheel structure 62 are fixedly connected with the foot-plate structure 3.

A first tendon-driven transmission pair 8 is connected in a transmission manner to an output end of the first driving device 1. The first tendon-driven transmission pair 8 is wound on the first idler structure 71 and then sleeved over the first driving-wheel structure 61 to form a tightened rotational transmission subassembly. The rotating direction of the first idler structure 71 is identical to that of the first driving-wheel structure 61. A second tendon-driven transmission pair 9 is connected in a transmission manner to an output end of the second driving device 2. The second tendon-driven transmission pair 9 is wound on the second idler structure 72 and then sleeved over the second driving-wheel structure 62 to form a tightened rotational transmission subassembly. The rotating direction of the second idler structure 72 is different from that of the second driving-wheel structure 62; that is, the rotating directions are opposite. According to the described transmission relationship, the second idler structure 72 and the second driving-wheel structure 62 rotate in opposite directions under the same driving of the second driving device 2 along the same direction. The terms "first" and "second" herein have no specific pointing meaning; they are merely a descriptive distinction. Therefore, the rotating direction of the first idler structure 71 and the rotating direction of the first driving-wheel structure 61 can be opposite under driving of the first driving device 1. One wheel among the first idler structure 71, the second idler structure 72, the first driving-wheel structure 61, and the second driving-wheel structure 62 rotates in a direction different from the rotating directions of the other three wheels under the same driving direction. Since only one set of the idler structure and the driving-wheel structure rotates in opposite directions, and another set of the idler structure and the driving-wheel structure rotates in identical direction, the set with identical rotating direction must have a rotating direction that matches the rotating direction of one of the idler structure and the driving-wheel structure in the set with opposite rotating directions.

Specifically, a first sprocket 11 and a second sprocket 21 are arranged at output ends of the first driving device 1 and the second driving device 2, respectively. Alternatively, structures, such as synchronous belt pulleys, that are convenient for bending and accurate power transmission can also be arranged at the output ends of the first driving device 1 and the second driving device 2, respectively. The first idler structure 71, the first driving-wheel structure 61, the second idler structure 72, and the second driving-wheel structure 62 are winding wheels. The first tendon-driven transmission pair 8 is composed of a first chain 81, a first metal cable A82, and a first metal cable B83, where the first metal cable A82 and the first metal cable B83 are respectively connected to two end portions of the first chain 81. Alternatively, the first tendon-driven transmission pair 8 and the second tendon-driven transmission pair 9 can both be composed of chains or synchronous belts and non-elastic rope A and non-elastic rope B, where the non-elastic rope A and the non-elastic rope B are respectively connected to two end portions of the chain or synchronous belt. The non-elastic rope A and the non-elastic rope B can be the same non-elastic rope. However, one non-elastic rope is difficult to tighten in the process of forming a tightened rotational transmission subassembly. When the non-elastic rope A and the non-elastic rope B are provided separately, only end portions of the non-elastic rope A and the non-elastic rope B need to be provided with clamping heads, where the clamping heads are respectively snapped on the foot-plate structure 3 or on the corresponding first driving-wheel structure 61 and second driving-wheel structure 62 to achieve formation of the tightened rotational transmission subassembly. Moreover, the non-elastic rope A and the non-elastic rope B of the second tendon-driven transmission pair 9 are arranged in a crossed manner between the second idler structure 72 and the second driving-wheel structure 62 to achieve opposite rotating directions between the second idler structure 72 and the second driving-wheel structure 62 under the same driving. The non-elastic rope includes non-metallic ropes and metal cables. Any rope with sufficiently high bearing capacity and that is not easily deformed can be adopted. Metal cables, specifically steel cables, have a lower cost and satisfy requirements. The chains or synchronous belts cooperate with sprockets or synchronous belt wheels, and non-elastic ropes are sleeved on corresponding winding wheels to form a rotational transmission system.

Specifically, the first chain 81 cooperates with the first sprocket 11. The first metal cable A82 and the first metal cable B83 are wound around the first idler structure 71 and then sleeved over the first driving-wheel structure 61 to form a tightened rotational transmission system.

The second tendon-driven transmission pair 9 is composed of a second chain 91, a second metal cable A92, and a second metal cable B93, where the second metal cable A82 and the second metal cable B83 are respectively connected to two end portions of the second chain 91. The second chain 21 cooperates with the second sprocket 91. The second metal cable A92 and the second metal cable B93 are wound around the second idler structure 72 and then sleeved over the second driving-wheel structure 62 to form a tightened rotational transmission system. The second metal cable A92 and the second metal cable B93 are arranged in a crossed manner between the second idler structure 72 and the second driving-wheel structure 62 to satisfy a requirement that the rotating direction of the second idler structure 72 is opposite to the rotating direction of the second driving-wheel structure 62. The overall transmission solution combines rigidity and flexibility, which has the accuracy of rigid transmission and characteristics of flexible transmission, such as the convenience of maintenance and mounting, less occupied space, and small mass. Since the distal joint does not bear the load of the motor module, the rotating inertia is extremely small, and the required driving force is lower than the driving force required for the legs of other robots.

Furthermore, a joint-frame mounting support seat 63 is fixedly mounted on the ankle-joint shaft structure 6, which is configured to mount the foot-plate structure 3. The first driving-wheel structure 61 and the second driving-wheel structure 62 are arranged at two side portions of the joint-frame mounting support seat 63. By mounting the foot-plate structure 3 through the joint-frame mounting support seat 63, firstly, it facilitates disassembly, replacement, and maintenance of the foot-plate structure 3 after abrasion, and secondly, it allows expansion for a lateral joint through the joint-frame mounting support seat 63. The ankle-joint shaft structure 6 is rotatably mounted at an end portion of the shank support structure 4 through a bearing structure. The foot-plate structure 3 is fixedly mounted on the ankle-joint shaft structure 6. The first driving-wheel structure 61, the second driving-wheel structure 62, the ankle-joint shaft structure 6, and the foot-plate structure 3 are fixedly connected to each other. This provides improved stability at the joint of the ankle-joint shaft structure 6 and prevents vibration or loosening. The knee-joint shaft structure 7 has the same configuration.

Furthermore, two sides of the joint-frame mounting support seat 63 are respectively arranged with one set of snap-hole slots. One set of snap-hole slots is composed of a fixed snapping slot 601 and an adjustment snapping hole 602. The fixed snapping slot 601 and the adjustment snapping hole 602 are arranged at two end portions of the joint-frame mounting support seat 63, respectively, and corresponding to position of the first driving-wheel structure 61 or the second driving-wheel structure 62.

A snapping-head structure 801 is fixedly arranged at the end portions of the first metal cable A82 and the second metal cable A92. The snapping-head structure 801 cooperates with the corresponding fixed clamping slot 601. A tightening-adjustment snapping-head structure 802 is arranged at the end portions of the second metal cable B93 and the first metal cable B83. The tightening-adjustment snapping-head structure 802 cooperates with the corresponding adjustment snapping hole 602. This facilitates the formation of a tightened rotational transmission subassembly between the first metal cable A82 and the first metal cable B83, or between the second metal cable A92 and the second metal cable B93.

Furthermore, the transmission ratio among the first driving device 1, the first idler structure 71, and the first driving-wheel structure 61 matches the transmission ratio among the second driving device 2, the second idler structure 72, and the second driving-wheel structure 62. The first driving device 1 and the second driving device 2 are mounted on the thigh support structure 5. The first driving device 1 and the second driving device 2 are arranged opposite to each other and have the same power parameters. This facilitates a more orderly structural design and facilitates the precise calculation of motion-control modes for subsequent combined driving.

Then, under a condition that the transmission ratios and parameters described above are identical, an example is provided in which rotating directions of the first idler structure 71 and the first driving-wheel structure 61 match the rotating direction of the second idler structure 72, and the rotating direction of the second idler structure 72 is different from the rotating direction of the second driving-wheel structure 62. This is a key point that enables the transmission mechanism of the present invention to perform kinetic-energy distribution and to control the independent motion of two joints. Since the first idler structure 71 and the second idler structure 72 rotate freely, a specific motion-control solution and principle are provided as follows.
(1) Rotation of only the ankle-joint shaft structure 6: this is achieved through reverse rotation of the first driving device 1 and the second driving device 2 at identical speeds. At this moment, the first driving-wheel structure 61 and the second driving-wheel structure 62 located at the ankle-joint shaft structure 6 receive two driving forces that have identical rotating directions and identical speeds. At this time, the magnitudes of the transmission torque are also the same. When transmission ratios or power parameters of the driving motors are different, the magnitudes of the torque become different. In this case, calculating identical speeds after superposition becomes more complex. In addition, since the positions of the first driving-wheel structure 61 and the second driving-wheel structure 62 do not overlap, offset forces or other complex situations may occur. Therefore, this configuration is generally not adopted. Two torques having identical speed act simultaneously on the ankle-joint shaft structure 6. Thus, only the ankle-joint shaft structure 6 rotates to output kinetic energy combined from the first driving device 1 and the second driving device 2. The first idler structure 71 and the second idler structure 72 located at the knee-joint shaft structure 7 are configured only as intermediate transmission structures under free rotation. Moreover, the first idler structure 71 and the second idler structure 72 rotate in opposite directions with identical speeds.
(2) Rotation of only the knee-joint shaft structure 7: this is achieved through identical rotating directions and identical speeds of the first driving device 1 and the second driving device 2. At this moment, the first driving-wheel structure 61 and the second driving-wheel structure 62 located at the ankle-joint shaft structure 6 receive two driving forces that oppose and cancel each other; that is, these driving forces have opposite directions and identical speeds. At this time, the magnitudes of the transmission torque are also the same. The torques are not necessarily required to be identical, but if the torques differ too much, in addition to the problems mentioned above, torque-fighting-induced oscillation may also occur at the ankle-joint shaft structure 6, which prevents precise motion and generates unnecessary energy consumption. Driving forces that oppose and cancel each other within an entire system do not output external work and therefore do not consume energy. Therefore, the ankle-joint shaft structure 6 cannot move. Under this premise, the first idler structure 71 and the second idler structure 72 cannot function as free intermediate wheels. The first idler structure 71 and the second idler structure 72 become locked as a whole relative to a fixed mounting portion of the knee-joint shaft structure 7, and cannot rotate; this is because that the knee-joint shaft structure 7 includes two relatively rotating portions, wherein the first idler structure 71 and the second idler structure 72 are both mounted on one of the two relatively rotating portions. Whether one shaft includes two rotating portions, or the shaft rotates relative to an end portion of the shank support structure 4 or the thigh support structure 5 and then is fixed to another joint frame, the principle is identical. The joint-shaft structures in the present invention refer in a broad sense to rotatable joint assemblies, rather than referring in a narrow sense to a specific shaft. The driving strokes of the first driving device 1 and the second driving device 2 have identical rotating directions and identical speeds at the knee-joint shaft structure 7. If transmission ratios and driving parameters are different, the speed of the driving also needs to be adjusted to achieve the same direction and speed. Therefore, kinetic energy combined from the first driving device 1 and the second driving device 2 can only be output by rotating the knee-joint shaft structure 7. At this moment, components between the foot-plate structure 3 and the shank support structure 4 are arranged as an integrated system. The driving devices pull the knee-joint shaft structure 7, which is torque-connected through the idler structures, to rotate through the tendon-driven transmission pairs. This achieves motion of the integrated system, including the foot-plate structure 3 and the shank support structure 4 relative to the thigh support structure 5.
(3) Combined rotation of the ankle-joint shaft structure 6 and the knee-joint shaft structure 7: this is achieved through different rotating speeds of the first driving device 1 and the second driving device 2. The rotating-direction combination of the ankle-joint shaft structure 6 and the knee-joint shaft structure 7 is determined by whether the rotating directions of the first driving device 1 and the second driving device 2 are identical or opposite, and by which driving device has the higher rotating speed.

In general, the calculation method for rotating speeds of the first joint-shaft structure 6 and the second joint-shaft structure 7 is as follows.

If the rotating speeds of the first driving device 1 and the second driving device 2 are *M*₁ and *M*₂ respectively,
transmission ratios between the first driving device 1 and the second driving device 2 and the first idler structure 71 and the second idler structure 72 are both *I*₂, and
and transmission ratios between the first driving device 1 and the second driving device 2 and the first driving-wheel structure 61 and the second driving-wheel structure 62 are both *I*₁, then it can be obtained that:
the rotating speed of the first joint-shaft structure 6 is ${V}_{1} = \frac{{M}_{1} - {M}_{2}}{2 {I}_{1}}$, and when the first driving device 1 and the second driving device 2 rotate in identical directions with identical speeds, then *M*₁ - *M*₂ = 0, and *V*₁ = 0;
the rotating speed of the second joint-shaft structure 7 is ${V}_{2} = \frac{{M}_{1} + {M}_{2}}{2 {I}_{2}}$, and when the first driving device 1 and the second driving device 2 rotate in opposite directions with identical speeds, then *M*₁ + *M*₂ = 0, and *V*₂ = 0.

Its performance effect is as follows. A coupling manner, in which a transmission mechanism connected to two driving devices performs the distribution of kinetic energy and the combination of kinetic energy, achieves control of the independent motion of two joints under different conditions. That is, an effect identical to two single driving devices independently controlling two joints can be achieved. Specifically, two joints can move independently, two joints can move simultaneously in a combined manner, and motion with identical speeds or different speeds can both be achieved. The tendon-driven design reduces motion inertia and further eliminates space and mass occupied by distal joint modules. This makes motion inertia extremely small. Required driving force and energy consumption are also relatively lower. It is convenient for selecting an improved appearance design and is beneficial to the safety of the robot body.

Under the condition that no blind spot exists in the motion combination of the transmission-combination control described above, since the present solution can achieve independent motion of a single joint through combined control of two driving devices, higher peak torque can be achieved. This provides a higher load capacity for a robot leg. The transmission mechanisms connected to two driving devices independently restrict the motion of the two joints. In a condition that one driving device or transmission mechanism has a fault, another set of the driving device and the transmission mechanism can still maintain stability of the two joints, thus enabling safer waiting for inspection and maintenance, and providing improved structural stability.

Under identical load conditions, the required power parameters of two driving devices for control are relatively small. Volume and mass are generally smaller. In general conditions that do not require full kinetic energy, since kinetic-energy distribution can be equivalent to two small-power driving devices independently controlling two independent joints, energy consumption is saved. Since two independent joints themselves require two driving devices for driving, achieving larger peak kinetic energy and torque ordinarily requires larger driving devices. The transmission solution of the present invention overcomes this problem. After adoption of the transmission solution of the present invention, theoretically, even when peak torque and kinetic energy are required to be increased to twice the original values, larger-power driving devices are not required. Therefore, manufacturing cost is reduced, and overall occupied space and mass of the device are reduced.

Although embodiments of the present invention are shown and described, it is understood by those of ordinary skill in the art that various changes, modifications, replacements, and variations can be made to these embodiments without departing from the principles and spirit of the present invention. The scope of the present invention is defined by the appended claims.

### INDUSTRIAL PRACTICALITY

In conclusion, the present invention provides a high-coupling humanoid robot leg based on tendon-driven, which enables the achievement of higher peak torque and provides sufficient load capacity for a robot leg. The high-coupling humanoid robot leg has lower energy consumption, lower cost, small motion inertia, and less overall occupied space and mass.

## Claims

1. A high-coupling humanoid robot leg based on tendon-driven, **characterized by** comprising a first driving device (1), a second driving device (2), a foot-plate structure (3), a shank support structure (4), and a thigh support structure (5), wherein the foot-plate structure (3) is rotatably mounted at one end of the shank support structure (4) through an ankle-joint shaft structure (6), and the thigh support structure (5) is rotatably mounted at another end of the shank support structure (4) through a knee-joint shaft structure (7);
a first idler structure (71) and a second idler structure (72) are rotatably arranged on the knee-joint shaft structure (7), the first idler structure (71) and the second idler structure (72) are arranged side by side in an independent manner, a first driving-wheel structure (61) and a second driving-wheel structure (62) are arranged on the ankle-joint shaft structure (6), and the first driving-wheel structure (61) and the second driving-wheel structure (62) are fixedly connected with the foot-plate structure (3); and
a first tendon-driven transmission pair (8) is connected in a transmission manner to an output end of the first driving device (1), the first tendon-driven transmission pair (8) is wound on the first idler structure (71) and then sleeved over the first driving-wheel structure (61) to form a tightened rotational transmission subassembly, a second tendon-driven transmission pair (9) is connected in a transmission manner to an output end of the second driving device (2), the second tendon-driven transmission pair (9) is wound on the second idler structure (72) and then sleeved over the second driving-wheel structure (62) to form a tightened rotational transmission subassembly, and a rotating direction of the second idler structure (72) is different from a rotating direction of the second driving-wheel structure (62).

2. The high-coupling humanoid robot leg based on tendon-driven according to claim 1, wherein sprockets or synchronous belt wheels are arranged at output ends of the first driving device (1) and the second driving device (2); the first idler structure (71), the first driving-wheel structure (61), the second idler structure (72), and the second driving-wheel structure (62) are winding wheels; the first tendon-driven transmission pair (8) and the second tendon-driven transmission pair (9) are both composed of chains or synchronous belts and non-elastic ropes, wherein the non-elastic ropes are respectively connected to two end portions of the chain or the synchronous belt; and the chains or the synchronous belts cooperate with the sprockets or the synchronous belt wheels, and the non-elastic ropes are sleeved on corresponding winding wheels to form a rotational transmission system.

3. The high-coupling humanoid robot leg based on tendon-driven according to claim 2, wherein a non-elastic rope A and a non-elastic rope B are connected to two end portions of the chain or the synchronous belt respectively; the non-elastic rope A and the non-elastic rope B are snapped on the foot-plate structure (3) or on corresponding first driving-wheel structure (61) and second driving-wheel structure (62) respectively; and the non-elastic rope A and the non-elastic rope B of the second tendon-driven transmission pair (9) are arranged in a crossed manner between the second idler structure (72) and the second driving-wheel structure (62).

4. The high-coupling humanoid robot leg based on tendon-driven according to any one of claims 1 to 3, wherein a first sprocket (11) and a second sprocket (21) are arranged at output ends of the first driving device (1) and the second driving device (2) respectively; the first tendon-driven transmission pair (8) is composed of a first chain (81), a first metal cable A(82), and a first metal cable B(83), wherein the first metal cable A(82) and the first metal cable B(83) are respectively connected to two end portions of the first chain (81); the first chain (81) cooperates with the first sprocket (11); the first metal cable A(82) and the first metal cable B(83) are wound around the first idler structure (71) and then sleeved over the first driving-wheel structure (61) to form a tightened rotational transmission system; and
the second tendon-driven transmission pair (9) is composed of a second chain (91), a second metal cable A(92), and a second metal cable B(93), wherein the second metal cable A(92) and the second metal cable B(93) are respectively connected to two end portions of the second chain (91); the second sprocket (21) cooperates with the second chain (91); the second metal cable A(92) and the second metal cable B(93) are wound around the second idler structure (72) and then sleeved over the second driving-wheel structure (62) to form a tightened rotational transmission system; and the second metal cable A(92) and the second metal cable B(93) are arranged in a crossed manner between the second idler structure (72) and the second driving-wheel structure (62).

5. The high-coupling humanoid robot leg based on tendon-driven according to claim 4, wherein a joint-frame mounting support seat (63) is fixedly mounted on the ankle-joint shaft structure (6), and the joint-frame mounting support seat (63) is configured to mount the foot-plate structure (3); and the first driving-wheel structure (61) and the second driving-wheel structure (62) are arranged at two side portions of the joint-frame mounting support seat (63).

6. The high-coupling humanoid robot leg based on tendon-driven according to claim 5, wherein two sides of the joint-frame mounting support seat (63) are respectively arranged with one set of snap-hole slots; the set of snap-hole slots is composed of a fixed snapping slot and an adjustment snapping hole; the fixed snapping slot and the adjustment snapping hole are arranged at two end portions of the joint-frame mounting support seat (63) respectively, and corresponding to a position of the first driving-wheel structure (61) or the second driving-wheel structure (62); and
a snapping-head structure is fixedly arranged at end portions of the first metal cable A(82) and the second metal cable A(92); the snapping-head structure cooperates with the corresponding fixed snapping slot; a tightening-adjustment snapping-head structure is arranged at end portions of the second metal cable B(93) and the first metal cable B(83); and the tightening-adjustment snapping-head structure cooperates with the corresponding adjustment snapping hole.

7. The high-coupling humanoid robot leg based on tendon-driven according to any one of claims 1 to 6, wherein the first driving device (1) and the second driving device (2) are motor modules.

8. The high-coupling humanoid robot leg based on tendon-driven according to any one of claims 1 to 7, wherein transmission ratios among the first driving device (1), the first idler structure (71), and the first driving-wheel structure (61) are equal to transmission ratios among the second driving device (2), the second idler structure (72), and the second driving-wheel structure (62).

9. The high-coupling humanoid robot leg based on tendon-driven according to claim 8, wherein the first driving device (1) and the second driving device (2) are both mounted on an end portion of the thigh support structure (5); and the first driving device (1) and the second driving device (2) are arranged opposite to each other.

10. The high-coupling humanoid robot leg based on tendon-driven according to any one of claims 1 to 9, wherein the ankle-joint shaft structure (6) is rotatably mounted at an end portion of the shank support structure (4) through a bearing structure; the foot-plate structure (3) is fixedly mounted on the ankle-joint shaft structure (6); and the first driving-wheel structure (61), the second driving-wheel structure (62), the ankle-joint shaft structure (6), and the foot-plate structure (3) are fixedly connected to each other.
